# EUROPÄISCHE PATENTSCHRIFT

(11) **EP 4 449 530 B1**
(45) Veröffentlichungstag und Bekanntmachung des Hinweises auf die Patenterteilung: **11.06.2025**
(21) Anmeldenummer: 22838652.0
(22) Anmeldetag: 13.12.2022
(51) Int. Cl.: H01M 8/06, H01M 8/18

(54) **REINIGUNGSVERFAHREN FÜR EINE VANADIUM-ELEKTROLYTFLÜSSIGKEIT EINER REDOX-DURCHFLUSSBATTERIE**
PURIFYING METHOD FOR A VANADIUM ELECTROLYTE LIQUID OF A REDOX FLOW BATTERY
PROCÉDÉ DE NETTOYAGE POUR UN LIQUIDE ÉLECTROLYTIQUE AU VANADIUM D'UNE BATTERIE À FLUX REDOX

(30) Priorität: 15.12.2021 AT 510062021
(43) Veröffentlichungstag der Anmeldung: 23.10.2024
(73) Patentinhaber: CellCube Energy Storage GmbH, 2355 Wiener Neudorf (AT)
(72) Erfinder: MARDILOVICH, Pavel, 1040 Wien (AT); POKORNY, Peter, 3001 Mauerbach (AT)
(74) Vertreter: Patentanwälte Pinter & Weiss OG
(86) Internationale Anmeldenummer: PCT/EP2022/085494
(87) Internationale Veröffentlichungsnummer: WO 2023/110799

(56) Entgegenhaltungen:
- WO-A1-2018/108895

## Beschreibung

Die gegenständliche Erfindung beschreibt ein Verfahren zum Verringern von Verunreinigungen einer Vanadium-Elektrolytflüssigkeit geeignet für eine Redox-Durchflussbatterie.

Eine Redox-Durchflussbatterie ist ein System zur Energieerzeugung bzw. -speicherung auf elektrochemischer Basis und besteht üblicherweise aus Tanks zur Speicherung positiver und negativer Elektrolytflüssigkeiten, sowie Pumpen und Leitungen zur Umwälzung der Elektrolytflüssigkeiten durch einen oder mehrere Zellstacks, welche wiederum jeweils aus einer Anzahl Zellen bestehen. Die Zellen des Zellstacks werden jeweils durch eine positive Halbzelle und eine negative Halbzelle gebildet, wobei die positive und negative Halbzelle einer Zelle durch eine semipermeable Membran, typischerweise eine lon-Austauschmembran, voneinander getrennt sind. Die positive Halbzelle enthält eine in einem Rahmen befindliche positive Elektrode, die von der positiven Elektrolytflüssigkeit durchströmt wird. Die negative Halbzelle enthält eine in einem Rahmen befindliche negative Elektrode, die von der negativen Elektrolytflüssigkeit durchströmt wird. Bei einer Vanadium-Redox-Durchflussbatterie besteht die positive Elektrolytflüssigkeit im geladenen Zustand aus Vanadium mit der Oxidationszahl +4 (auch als V^{IV} bezeichnet) und Vanadium mit der Oxidationszahl +5 (auch als V^{V} bezeichnet). Die negative Elektrolytflüssigkeit besteht im geladenen Zustand aus Vanadium mit der Oxidationszahl +2 (auch als V^{II} bezeichnet) und aus Vanadium mit der Oxidationszahl +3 (auch als V^{III} bezeichnet) - womit die negative Elektrolytflüssigkeit "negativer" als die positive Elektrolytflüssigkeit ist. Die durchschnittliche Oxidationszahl der gesamten Elektrolytflüssigkeit (negative und positive gesamtheitlich betrachtet) beträgt somit +3,5. Sowohl die positive, als auch die negative Elektrolytflüssigkeit können zudem Schwefelsäure und weitere Additive enthalten. Die positiven und negativen Elektroden sind meist als poröse Matten aus Graphit gefertigt, die von der Elektrolytflüssigkeit durchströmt werden können. Zwischen einzelnen benachbarten Zellen des Zellstacks sind bipolare Elektrodenplatten angeordnet, welche meist aus einem Verbundmaterial aus Kohlenstoff und Kunststoff gefertigt werden. Auf den axialen Außenseiten der axial außen liegenden Zellen des Zellstacks befinden sich an den Elektrodenplatten Stromabnehmer, über die ein elektrischer Kontakt nach außen geführt wird, um elektrische Spannung abgreifen zu können (Entladen der Redox-Durchflussbatterie) oder um eine elektrische Spannung anlegen zu können (Laden der Redox-Durchflussbatterie). Der Zellstack wird auf den axialen Außenseiten jeweils von einer negativen Endplatte und einer positiven Endplatte abgeschlossen, durch welche der Zellstack zusammengehalten wird.

Üblicherweise wird das in einer Vanadium-Elektrolytflüssigkeit verwendete Vanadium in chemischer Verbindung mit anderen Elementen vorgefunden. Bei der Produktion von Vanadium-Elektrolytflüssigkeiten ist es wichtig, dass Verunreinigungen, die die Performance der Vanadium-Redox-Batterie beeinflussen, möglichst gering gehalten werden. Insbesondere sind Verunreinigungen durch Wasserstoffkatalysatoren, wie z.B. Kupfer (Cu), Silber (Ag), Gold (Au), Arsen (As), Antimon (Sb) und Elemente der Platingruppe in der Elektrolytflüssigkeit möglichst zu reduzieren, da eine übermäßige Wasserstoffentwicklung während des Betriebs den Wirkungsgrad der Vanadium-Redox-Batterie deutlich reduzieren kann. Folglich ist es vorteilhaft eine Elektrolytflüssigkeit von Verunreinigungen zu befreien, bevor sie in einer Redox-Durchflussbatterie für die Speicherung von Energie verwendet wird.

Als Ausgangsmaterial für die Vanadium-Elektrolytflüssigkeit wird meist V^{V}, z.B. Vanadiumpentoxid (V₂O₅) oder Ammoniummetavanadat (NH₄VO₃) herangezogen. Da diese Materialien in Minen abgetragen werden, kann die Qualität, d.h. der Grad der Verunreinigungen des Ausgangsmaterials, jedoch stark variieren. Vor einer weiteren Behandlung wird das Ausgangsmaterial oftmals chemisch gereinigt, um eine erste Verringerung der Verunreinigungen zu erreichen, wie beispielsweise in der EP 0713257 A1 offenbart. Üblicherweise erfolgt diese Reinigung über eine Einstellung diverser Parameter wie des pH-Werts und der Temperatur. Mit dieser Methode werden Sulphate, Hydroxide oder Oxide selektiv abgeschieden, woraufhin das vorgereinigte Ausgangsmaterial in Schwefelsäure (H₂SO₄) gelöst wird. Im Anschluss wird die Lösung reduziert, wobei eine chemische Reduktion mittels Wasserstoff (H₂), Kohlenmonoxid (CO), Schwefeldioxid (SO₂), etc. erfolgen kann. Im Rahmen dieser Reduktion wird eine Mischung von V^{III} und V^{IV} zu gleichen Anteilen erzeugt, wie es beispielsweise die CN 102354762 A offenbart. Ausgehend von dieser Mischung von V^{III} und V^{IV} kann durch eine weitere chemische Reduktion negative Elektrolytflüssigkeit (V^{II} und V^{III} beinhaltend) oder durch eine chemische Oxidation positive Elektrolytflüssigkeit (V^{IV} und V^{V} beinhaltend) erzeugt werden. Davor kann zudem, wie in der EP 1406333 A1 offenbart, die vorgereinigte Elektrolytflüssigkeit gefiltert werden, um Partikel zu entfernen. Die EP2576719 A1 zeigt beispielsweise eine Filterreihe, die Chelatharz beinhaltet. Bei Verwendung der zuvor erwähnten Filtermethoden können in der Elektrolytflüssigkeit beispielsweise Elemente der Platingruppe (Ruthenium Ru, Rhodium Rh, Palladium Pd, Osmium Os, Iridium Ir und Platin Pt) auf einen Anteil von unter 4,5 Gewichts-ppm reduziert werden. Da noch niedrigere Konzentrationen an Verunreinigungen vorteilhaft sind, um im Betrieb einer Redox-Durchflussbatterie die aufgrund dieser Verunreinigungen auftretende parasitäre Wasserstoffentwicklung zusätzlich zu reduzieren wurde die Methode gemäß AT 519236 A4 entwickelt, mit der es möglich ist die kritischen, in der Regel metallischen Verunreinigungen der Elektrolytflüssigkeit auf eine Konzentration von unter 1 Gewichts-ppm reduzieren zu können.

Es ist somit eine Aufgabe der gegenständlichen Erfindung eine Methode anzugeben, mit der die Konzentration der Verunreinigungen einer Elektrolytflüssigkeit geeignet für eine Redox-Durchflussbatterie effizient verringert werden können.

Die unabhängigen Ansprüche 1 und 3 definieren die erfindungsgemäßen Lösungen der gestellten Aufgabe. Dabei beschreibt Anspruch 1 ein Reinigungsverfahren zum Verringern von Verunreinigungen einer Vanadium-Elektrolytflüssigkeit geeignet für eine Redox-Durchflussbatterie, wobei die Vanadium-Elektrolytflüssigkeit aus einer Mischung von negativer und positiver Vanadium-Elektrolytflüssigkeit der Redox-Durchflussbatterie, vorzugsweise im Verhältnis 50:50, besteht und die Vanadium-Elektrolytflüssigkeit von einem ersten Tank durch negative Halbzellen eines Zellstacks oder mehrerer Zellstacks einer Reinigungs-Redox-Durchflussbatterie umgewälzt wird, wodurch die Vanadium-Elektrolytflüssigkeit die negativen Halbzellen durchläuft, wobei eine Spannung an den Zellstack oder mehrere Zellstacks der Reinigungs-Redox-Durchflussbatterie angelegt wird und die Vanadium-Elektrolytflüssigkeit in den negativen Halbzellen dabei elektrochemisch reduziert wird, und dass zumindest ein Teil der Verunreinigungen der Vanadium-Elektrolytflüssigkeit dabei auf negative Elektroden der negativen Halbzellen abgeschieden wird, wobei die Vanadium-Elektrolytflüssigkeit nach dem Durchlaufen aller negativen Halbzellen des einen Zellstacks oder der mehreren Zellstacks über eine Verbindungsvorrichtung, welche die negativen Halbzellen und die positiven Halbzellen eines Zellstacks miteinander verbindet, ohne Durchlaufen eines zweiten Tanks positive Halbzellen des einen Zellstacks oder der mehreren Zellstacks der Reinigungs-Redox-Durchflussbatterie durchläuft, wobei die Vanadium-Elektrolytflüssigkeit nach dem Durchlaufen der positiven Halbzellen des Zellstacks einem zweiten Tank zugeführt und im zweiten Tank gespeichert wird. Der technische Effekt, der sich dadurch ergibt, ist, dass die Elektrolytflüssigkeit nach einmaligem Durchlaufen der negativen Halbzellen eines oder mehrerer Zellstacks und der positiven Halbzellen eines oder mehrerer Zellstacks von Verunreinigungen befreit werden kann. Mit dieser "Single-Pass-Methode" kann ein Reinigungsverfahren zum Reinigen von Elektrolytflüssigkeit schneller und energieeffizienter durchgeführt werden. Der Effekt der Abscheidung von Verunreinigungen der Elektrolytflüssigkeit auf negative Elektroden der negativen Halbzellen ist thermodynamisch bedingt und üblicherweise im Normalbetrieb einer Redox-Durchflussbatterie unerwünscht, da die Verunreinigungen durch die Ablagerung auf den in der Regel porösen negativen Elektroden vorhandene Poren verstopfen und weiters als Wasserstoffkatalysatoren dienen. Als Verunreinigungen werden Stoffe bezeichnet, die in der Elektrolytflüssigkeit unerwünscht sind und gegebenenfalls auch den ordnungsgemäßen Betrieb einer Redox-Durchflussbatterie unter Verwendung der verunreinigten Elektrolytflüssigkeit beeinträchtigen können. Erfindungsgemäß wird dieser Effekt jedoch genutzt, um eine Elektrolytflüssigkeit zu reinigen. Als negative (und auch positive) Elektroden können diverse geeignete, elektrochemisch ausreichend stabile elektrisch leitfähige Materialien verwendet werden - oftmals werden Matten aus Karbon- oder Graphitfasern verwendet. Die positiven Elektroden dienen der Oxidierung der Elektrolytflüssigkeit und sollten sich daher aus einem Material mit einem geringen Überpotential zusammensetzen, womit eine effizientere elektrochemische Reaktion und damit eine schnellere Abscheidung der Verunreinigungen auf die negativen Elektroden ermöglicht wird, da durch das geringe Überpotential höhere elektrische Ströme an die Zellen der Reinigungs-Redox Durchflussbatterie angelegt werden können. Somit werden im Laufe des Reinigungsvorgangs die Verunreinigungen von der Elektrolytflüssigkeit auf die negativen Elektroden der negativen Halbzelle der Reinigungs-Redox-Durchflussbatterie abgeschieden, womit die Elektrolytflüssigkeit von den Verunreinigungen befreit wird. Die derart gereinigte Elektrolytflüssigkeit kann dann für den ordentlichen Betrieb einer Redox-Durchflussbatterie verwendet werden.

Zur Durchführung des erfindungsgemäßen Verfahrens kann als Reinigungs-Redox-Durchflussbatterie eine übliche Redox-Durchflussbatterie verwendet werden. Es kann auch eine üblich verwendete Spannung, die sonst zum Laden der Redox-Durchflussbatterie an den Zellstack angelegt werden - üblicherweise 1,0-1,6 V pro Zelle im jeweiligen Zellstack - verwendet werden, wobei jedoch keine separaten negativen und positiven Elektrolytflüssigkeiten durch die Halbzellen umgewälzt werden, sondern eine Mischung aus negativer und positiver Elektrolytflüssigkeit als zu reinigende Elektrolytflüssigkeit durch die negativen Halbzellen umgewälzt wird. Dabei sollten die (in der Regel vor der Vermischung einzeln vorhandenen) negative und positive Elektrolytflüssigkeit größtenteils ungeladen sein, da ansonsten im Rahmen des Reinigungsvorgangs kein Ladevorgang effizient "simuliert" werden kann und zudem bei der Vermischung von geladenen negativen und positiven Elektrolytflüssigkeiten zu einer zu reinigenden Elektrolytflüssigkeit eine an sich unerwünschte thermische Reaktion auftritt. Zum Messen des Anteils der aktuell vorhandenen Verunreinigungen in der Elektrolytflüssigkeit können bekannte Methoden, wie z.B. eine periodische Massenspektrometrie mit induktiv gekoppeltem Plasma (ICP-MS - Inductively Coupled Plasma - Mass Spectrometry) verwendet werden, wobei der Anteil der Verunreinigungen in der Elektrolytflüssigkeit in den Tanks oder an anderer beliebiger Stelle des Kreislaufs der Reinigungs-Redox-Durchflussbatterie gemessen werden kann.

Es kann zudem im ersten Tank und/oder im zweiten Tank ein Wärmetauscher vorgesehen sein, der der Abführung von thermischer Energie, die während des Reinigungsvorgangs entsteht, dient.

Nachdem die Verunreinigungen der Elektrolytflüssigkeit auf den gewünschten Grad verringert wurden, kann die Elektrolytflüssigkeit oxidiert und damit auf das gewünschte Redox-Potential angehoben werden, um eine positive Elektrolytflüssigkeit zu erzeugen. Dies kann z.B. durch Verdünnung mit Wasser oder Schwefelsäure erfolgen. Um aus der gereinigten Elektrolytflüssigkeit eine negative Elektrolytflüssigkeit zu erzeugen, kann die gereinigte Elektrolytflüssigkeit chemisch oder elektrochemisch reduziert werden. Verfahren zum Oxidieren und Reduzieren von Elektrolytflüssigkeiten sind hinlänglich bekannt und werden daher an dieser Stelle nicht näher beschrieben.

Um eine Wasserstoffproduktion, welche durch die auf die negative Elektroden abgeschiedenen Verunreinigungen verursacht wird, sowie eine Rekontamination der Elektrolytflüssigkeit durch ein Lösen der auf die negativen Elektroden abgeschiedenen Verunreinigungen zu verhindern, können während oder nach dem Reinigungsverfahren die negativen Elektroden der negativen Halbzellen der Reinigungs-Redox-Durchflussbatterie einer Reinigung unterzogen werden, um die beschichteten Verunreinigungen zu entfernen. Dies kann also nach der Durchführung des Reinigungsverfahrens der Elektrolytflüssigkeit oder während einer Unterbrechung des Reinigungsverfahrens durchgeführt werden. Diese Reinigung der negativen Elektroden kann chemisch, z.B. unter Verwendung eines Oxidationsstoffes wie, z.B. positiv geladener Elektrolytflüssigkeit, Wasserstoffperoxid H₂O₂, oder elektrochemisch erfolgen. Dabei muss sich die Reinigungs-Redox-Durchfluss-Batterie im Leerlauf befinden. Wird eine positiv geladene Elektrolytflüssigkeit zur Reinigung der negativen Elektroden verwendet, so nimmt die, vorzugsweise reine, positive Elektrolytflüssigkeit die Verunreinigungen auf. Dies kann nur so lange erfolgen, bis die positive Elektrolytflüssigkeit einen gewissen Grad an Verunreinigungen aufweist, woraufhin die positive Elektrolytflüssigkeit einer Reinigung unterzogen werden, oder auch entsorgt werden, kann.

Mit dem beschriebenen Reinigungsverfahren werden in erster Linie metallische Verunreinigungen entfernt, indem sie auf die negativen Elektroden abgeschieden werden. Das Reinigungsverfahren kann so lange durchgeführt werden, bis der Anteil der Verunreinigungen der Elektrolytflüssigkeit einen oder mehrere der folgenden Grenzwerte erreicht bzw. unterschreitet: 0.5 Massen-ppm Cu; 1 Massen-ppm As, Pb, Sb; 0,1 Massen-ppm Rh, Ru, Au, Ag und andere Elemente der Pt-Gruppe. Als Nebeneffekt werden bei Anwendung des Verfahrens auch andere, jedoch bei Verwendung der Elektrolytflüssigkeit einer Redox-Durchflussbatterie den ordnungsgemäßen Betrieb ebendieser nicht beeinträchtigenden Stoffe, wie Sn, Pb, Bi auf die negativen Elektroden abgeschieden und damit aus der Elektrolytflüssigkeit entfernt.

Es wird allerdings auch der Anteil an Schwefeldioxid SO₂ der Elektrolytflüssigkeit verringert, allerdings nicht durch Abscheidung auf die negativen Elektroden, sondern durch Oxidation, bzw. Reduktion. Schwefeldioxid SO₂ führt in einer Vanadium-Elektrolytflüssigkeit im laufenden Betrieb ebenso zu einer erhöhten Wasserstoffbildung, weswegen die Verringerung von Schwefeldioxid SO₂ eine vorteilhafte Wirkung darstellt.

Das Reinigungsverfahren wird erfindungsgemäß auf eine Vanadium-Elektrolytflüssigkeit angewendet. Die Vanadium-Elektrolytflüssigkeit wird also durch die elektrochemische Reduzierung der Elektrolytflüssigkeit in den negativen Halbzellen als zweiwertiges Vanadium V^{II} gebildet, welches als Indikator für einen erfolgreich initiierten Reinigungsprozess dient. Dabei kann ab Anteilen von 0,001 M V^{II} von einem aktiven Reinigungsprozess ausgegangen werden.

Es können auch andere Elektrolytflüssigkeiten, wie beispielsweise Eisen-Chrom-Elektrolytflüssigkeiten (somit geeignet für eine Eisen-Chrom-Redox-Durchfluss-Batterie) auf die beschriebene Weise gereinigt werden, was jedoch nicht Teil des Schutzbegehrens ist. Wichtig ist, dass die positive und negative Elektrolytflüssigkeit mischbar sind, d.h. chemisch weitgehend ähnlich sind bzw. nur einen anderen Oxidationszustand aufweisen (wie z.B. V²⁺ und V³⁺, VO²⁺ und VO²⁺ im Falle der Vanadium-Redox-Durchflussbatterie).

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt
Fig.1 eine Redox-Durchflussbatterie mit einem Zellstack,
Fig.2 einen Schnitt durch den Zellstack,
Fig.3 eine erste Ausführungsform des Reinigungsverfahrens,
Fig.4 eine zweite Ausführungsform des Reinigungsverfahrens.

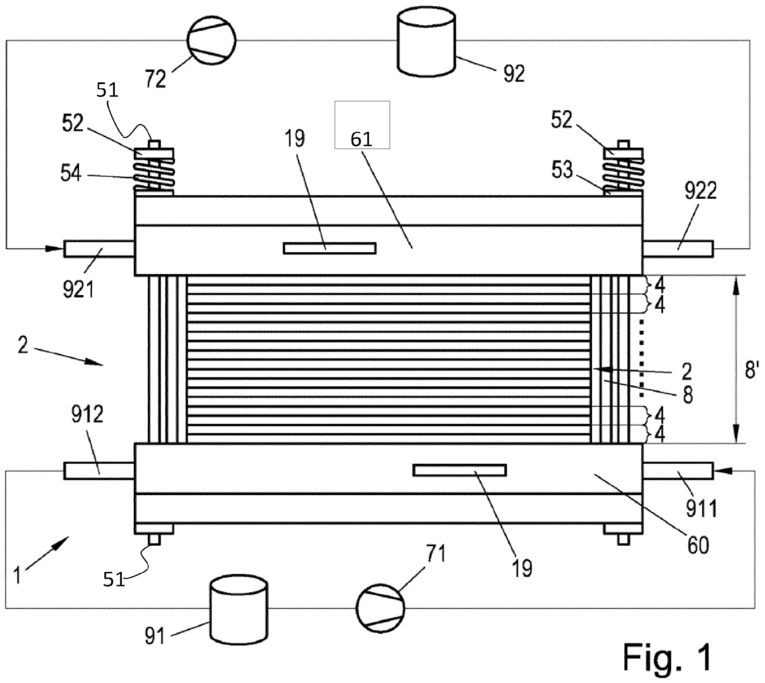

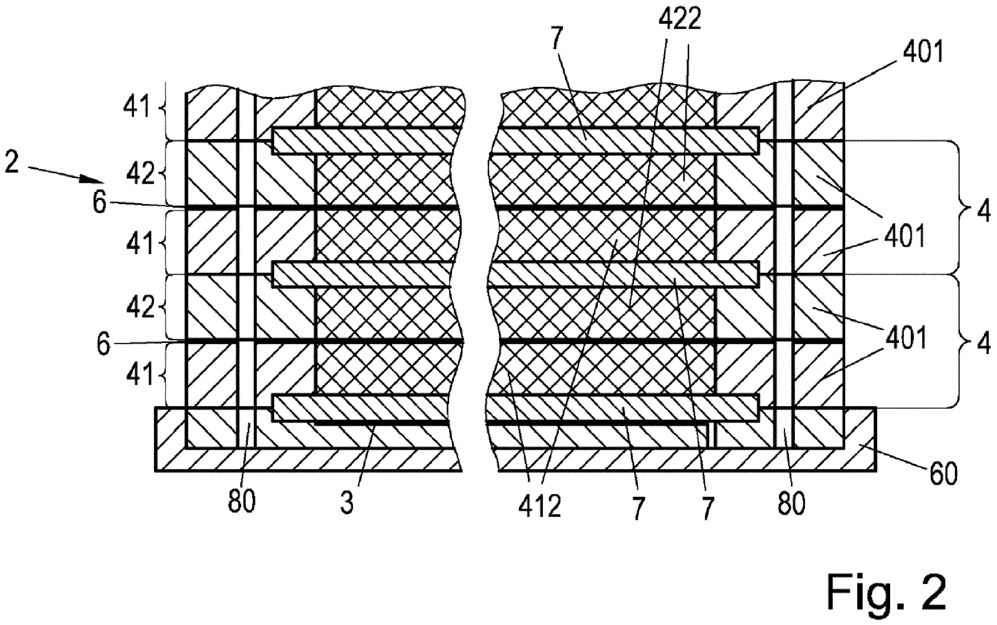

Mit Bezugnahme auf Fig.1 und 2 wird der hinlänglich bekannte Aufbau einer üblichen Redox-Durchflussbatterie 1 nach dem Stand der Technik erläutert. Ein Zellstack 2 einer Redox-Durchflussbatterie 1 umfasst eine Mehrzahl von Zellen 4. Jede Zelle wird aus einer positiven Halbzelle 42 und einer negativen Halbzelle 41 gebildet, es sind also im Zellstack 2 positive Halbzellen 42 und negative Halbzellen 41 abwechselnd angeordnet. Zwischen der positiven Halbzelle 42 und der negativen Halbzelle 41 einer Zelle 4 ist jeweils eine semipermeable Membran 6, typischerweise eine lon-Austauschmembran (Kation- und/oder Anion-Austauschmembran, z.B. Nafion^{®}) angeordnet. Zwischen zwei benachbarten Zellen 4 ist eine Elektrodenplatte 7, z.B. eine bipolare Platte, angeordnet. In den Rahmen 401 der positiven Halbzellen 42 sind jeweils eine positive Elektrode 422 angeordnet, in den Rahmen 401 der negativen Halbzellen 41 sind jeweils negative Elektroden 412 angeordnet. Die positiven Elektroden 422 und negativen Elektroden 412 sind üblicherweise als Matten aus Karbon oder Graphitfasern ausgeführt. Über Ausnehmungen 80 in den Rahmen 401 der positiven Halbzellen 41 und der negativen Halbzellen 42 bzw. Zellen 4 werden im Normalbetrieb anhand der Pumpen 71,72 elektrisch unterschiedlich geladene Elektrolytflüssigkeiten durch die Zellen 4 gepumpt, wobei in einer Zelle 4, bzw. der jeweiligen positiven Halbzelle 42 jeweils die positive Elektrode 422 von der positiven Elektrolytflüssigkeit und die negative Elektrode 412 der negativen Halbzelle 41 von der negativen Elektrolytflüssigkeit durchströmt wird. Bei einigen Typen von Redox-Durchflussbatterien 1, wie z.B. einer Vanadium-Redox-Durchflussbatterie oder einer Vanadium-Polyhalit-Batterie, sind die beiden Elektrolytflüssigkeiten chemisch weitgehend ähnlich bzw. weisen nur einen anderen Oxidationszustand in den Halbzellen auf (z.B. V²⁺ und V³⁺, VO²⁺ und VO₂⁺).

Fig.1 zeigt ebenso die Tanks 91, 92 einer Redox-Durchflussbatterie 1, in welchen üblicherweise die Elektrolytflüssigkeiten für den Betrieb gespeichert sind. Im Normalbetrieb, d.h. im Laufe der Energieerzeugung bzw. Energiespeicherung werden die Elektrolytflüssigkeiten unter Verwendung der Pumpen 71,72 zwischen den negativen Halbzellen 41 bzw. positiven Halbzellen 42 und den negativen bzw. positiven Tanks 91,92 umgewälzt. Die negativen bzw. positiven Tanks 91,92 können räumlich getrennte Behälter sein, können aber auch, beispielsweise als zwei, durch eine Trennwand abgeteilte Abteile in einem gemeinsamen Behälter gebildet sein. Der Zellstack 2 wird an den beiden axialen Enden durch eine negative Endplatte 60 und eine positive Endplatte 61, beispielsweise aus Kunststoff gefertigt, abgeschlossen. Die negative Endplatte 60 und die positive Endplatte 61 werden durch Spannmittel 50, bestehend aus durchreichenden Bolzen 51, Muttern 52, Beilagscheiben 53 und Federn 54, verspannt und pressen somit die Rahmen 401 der negativen Halbzellen 41 und positiven Halbzellen 42 des Zellstacks 2 zusammen. An der negativen Endplatte 60 und der positiven Endplatte 61 kann jeweils ein elektrischer Anschluss 19 vorgesehen sein, über den die Stromabnehmer 3 im Inneren der Redox-Durchflussbatterie 1 an beiden Seiten der Redox-Durchflussbatterie 1 mit einem externen Stromkreis verbunden werden können. Aus Übersichtsgründen ist der elektrische Anschluss 19 nur in Fig. 1 dargestellt, und die Verbindung zwischen Stromabnehmer 3 und elektrischem Anschluss 19 nicht in den Figuren ersichtlich. Weiters sind im gezeigten Ausführungsbeispiel an den Endplatten 60 die Elektrolytflüssigkeitsanschlüsse für die Zu- und Abführung der Elektrolytflüssigkeiten vorgesehen. Dabei dient ein positiver Zufluss 921 um die positiven Halbzellen mit Elektrolytflüssigkeit (im Normalbetrieb also positiver Elektrolytflüssigkeit) zu versorgen und ein positiver Abfluss 922 um die Elektrolytflüssigkeit nach Durchfließen der positiven Halbzellen 42 in den positiven Tank 92 rückzuführen. Analog dient ein negativer Zufluss 911 um die negativen Halbzellen 41 mit Elektrolytflüssigkeit (im Normalbetrieb also negativer Elektrolytflüssigkeit) zu versorgen und ein negativer Abfluss 912 um die Elektrolytflüssigkeit nach Durchfließen der negativen Halbzellen 41 in den negativen Tank 91 rückzuführen. Um ein mögliches Setzen der, beispielsweise elastischen, Rahmen der Zellen 4 durch den Anpressdruck zu verhindern, können zwischen der negativen Endplatte 60 und der positiven Endplatte 61 Abstandshalter 8 vorgesehen sein, um einen konstanten Abstand 8' zwischen der negativen Endplatte 60 und der positiven Endplatte 61 sicher zu stellen.

Für den Betrieb der Redox-Durchflussbatterie 1 ist es anzustreben, die Verunreinigungen in der zu reinigenden Elektrolytflüssigkeit nieder zu halten, vorzugsweise unter 1 Gewichts-ppm. Verunreinigungen können As, Pb, Sb, Rh, Ru, Au, Ag, usw. sein. Das erfindungsgemäße Reinigungsverfahren kann durchgeführt werden, bis die Elektrolytflüssigkeit 101 als Verunreinigung 11 weniger als 0.5 Massen-ppm Cu und/oder unter 1 Massen-ppm As, Pb, Sb und/oder jeweils unter 0,1 Massen-ppm Rh, Ru, Au, Ag und/oder anderer Elemente der Platingruppe aufweist. Vorzugsweise kann das erfindungsgemäße Reinigungsverfahren durchgeführt werden, bis die Elektrolytflüssigkeit 101 als Verunreinigung 11 weniger als 0.1 Massen-ppm Cu und/oder unter 0.1 Massen-ppm As, Pb, Sb und/oder jeweils unter 0,01 Massen-ppm Rh, Ru, Au, Ag und/oder anderer Elemente der Platingruppe aufweist. Zur Reinigung der Elektrolytflüssigkeit wird dabei erfindungsgemäß wie folgt vorgegangen.

Erfindungsgemäß wird als zu reinigende Elektrolytflüssigkeit 101 eine Vanadium-Elektrolytflüssigkeit verwendet. Die Elektrolytflüssigkeit 101 besteht aus einem Verhältnis von V^{III}:V^{IV} von etwa 50:50, wie sie beispielsweise auch durch Mischen positiver und negativer Elektrolytflüssigkeit einer Vanadium-Redox-Durchflussbatterie wie in Fig.1 dargestellt entsteht oder auch durch die im Stand der Technik bekannten Methoden erzeugt werden kann. Es ist in der Elektrolytflüssigkeit 101 also ein gewisser Grad an Verunreinigungen 11 vorhanden, welcher zu verringern ist. Es kann für die Anwendung des erfindungsgemäßen Reinigungsverfahrens als Reinigungs-Redox-Durchflussbatterie 1' eine Redox-Durchflussbatterie 1, wie sie in Fig.1 und Fig.2 beschrieben ist, verwendet werden, wobei eine sonst zum Laden üblicherweise verwendete Spannung V in der Höhe von z.B. 1,6V pro Zelle angelegt werden kann.

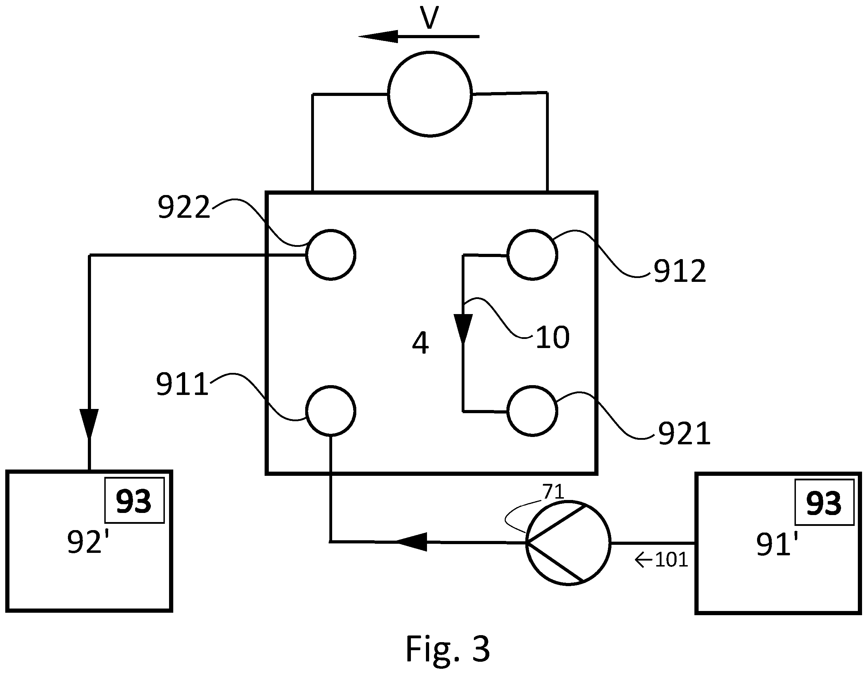

Im Verfahren nach Fig. 3 ist die zu reinigende Elektrolytflüssigkeit 101 in einem ersten Tank 91' gespeichert. Der erste Tank 91' kann der Tank einer Reinigungs-Redox-Durchflussbatterie 1', d.h. einer handelsüblichen Redox-Durchflussbatterie 1 sein, wie in Fig.1 dargestellt. Die Reinigungs-Redox-Durchflussbatterie 1' kann mit einem zweiten Tank 92' verbunden sein. Durch entsprechende Anschlüsse kann die im ersten Tank 91' gespeicherte Elektrolytflüssigkeit wie nachfolgend geschildert über die Reinigungs-Redox-Durchflussbatterie 1' umgewälzt werden. Wird die Reinigungs-Redox-Durchflussbatterie 1' zum Reinigen von Elektrolytflüssigkeit verwendet, so werden keine positive und negative Elektrolytflüssigkeit einzeln umgewälzt, sondern die zu reinigende Elektrolytflüssigkeit besteht aus einer Mischung aus positiver und negativer Elektrolytflüssigkeit.

Zum Verringern von Verunreinigungen 11 der zu reinigenden Elektrolytflüssigkeit 101 wird die Elektrolytflüssigkeit 101 durch die Reinigungs-Redox-Durchflussbatterie 1' umgewälzt. Hierbei wird die zu reinigende Elektrolytflüssigkeit 101 von einem ersten Tank 91' durch negative Halbzellen 41 eines Zellstacks 4 oder mehrerer Zellstacks 4 der Reinigungs-Redox-Durchflussbatterie 1' umgewälzt, wodurch die Elektrolytflüssigkeit 101 die negativen Halbzellen 41 durchläuft. Dabei wird eine Spannung an den Zellstack 4 oder die mehreren Zellstacks 4 der Reinigungs-Redox-Durchflussbatterie (1') angelegt und die Elektrolytflüssigkeit 101 in den negativen Halbzellen 41 dabei elektrochemisch reduziert. Dabei wird zumindest ein Teil der Verunreinigungen 11 der Elektrolytflüssigkeit 101 auf negative Elektroden 410 der negativen Halbzellen 41 abgeschieden. Nach dem Durchlaufen der negativen Halbzellen 41 des einen Zellstacks 4 oder der mehreren Zellstacks 4 der Reinigungs-Redox-Durchflussbatterie 1' durchläuft die zu reinigende Elektrolytflüssigkeit 101 die positiven Halbzellen 42 des einen Zellstacks 4 oder der mehreren Zellstacks 4 der Reinigungs-Redox-Durchflussbatterie 1', ohne dabei einen zweiten Tank zu durchlaufen. Das bedeutet im Wesentlichen, dass die aus den negativen Halbzellen 41 austretende Elektrolytflüssigkeit direkt in die positiven Halbzellen 42 geleitet wird. Zu diesem Zweck ist eine Verbindungsvorrichtung 10 vorgesehen, welche die negativen Halbzellen 41 und die positiven Halbzellen 42 des Zellstacks 4 oder der mehreren Zellstacks 4 miteinander verbindet. Die Verbindungsvorrichtung 10 kann in der Reinigungs-Redox-Durchflussbatterie 1' integriert sein, beispielsweise in den Rahmen 401 der der Halbzellen 41, 42, kann aber auch extern an der Reinigungs-Redox-Durchflussbatterie 1' angeordnet sein.

In der negativen Halbzelle 41 wird in der Elektrolytflüssigkeit 101 V^{IV} zu V^{III} elektrochemisch reduziert, wobei in weiterer Folge ein Teil des V^{III} zu V^{II} elektrochemisch reduziert wird. Dabei wird in der negativen Halbzelle 41 eine Konzentration von mehr als 0,001M an V" erreicht, was einen Indikator für das für die Reinigung notwendige Ambiente darstellt. Somit werden die, in der Regel metallischen, Verunreinigungen 11 elektrochemisch oder chemisch auf die negativen Elektroden 412 der negativen Halbzellen 41 der Reinigungs-Redox-Durchflussbatterie 1' beschichtet, z.B. im Rahmen der Reaktion 2 V²⁺ + Cu²⁺ ↔ 2 V³⁺ + Cu. Als rein elektrochemische Reaktion kann beispielsweise Cu²⁺ + 2e⁻ → Cu erfolgen, wobei diese elektrochemische Reaktion parallel zur üblichen Redox-Reaktion Reaktion V³⁺ + e⁻ → V²⁺ abläuft.

Gemäß einer bevorzugten Ausführungsform der Erfindung, die in Fig.3 dargestellt ist, wird die zu reinigende Elektrolytflüssigkeit 101 über den negativen Zufluss 911 und den negativen Abfluss 912 durch die negativen Halbzellen 41 der Reinigungs-Redox-Durchflussbatterie 1' umgewälzt und anschließend, ohne zuvor einen zweiten Tank zu durchlaufen, über den positiven Zufluss 921 und den positiven Abfluss 922 durch die positiven Halbzellen 42 der Reinigungs-Redox-Durchflussbatterie 1' umgewälzt und in einem zweiten Tank 92' gespeichert, der ganz besonders vorzugsweise der Tank einer Reinigungs-Redox-Durchflussbatterie 1' sein kann. In dieser Ausführung ist die Verbindungsvorrichtung 10 eine Leitung, die den negativen Abfluss 912 und den positiven Zufluss 921 miteinander verbindet.

Es wird die Elektrolytflüssigkeit 101 von einem ersten Tank 91' über den negativen Zufluss 911 durch die negativen Halbzellen 41 des Zellstacks 4 der Reinigungs-Redox-Durchflussbatterie 1' gepumpt. Weiter wird die Elektrolytflüssigkeit 101 von den negativen Halbzellen 41 über den negativen Abfluss 912 und über eine Verbindungsvorrichtung 10, ohne Durchlaufen eines zweiten Tanks 92`, und über den positiven Zufluss 921 durch die positiven Halbzellen 42 des Zellstacks 4 der Reinigungs-Redox-Durchflussbatterie 1' gepumpt. Weiter wird die Elektrolytflüssigkeit 101 von den positiven Halbzellen 42 des ersten Zellstacks 4 über den positiven Abfluss 922 in einen zweiten Tank 92' gepumpt.

Die Verbindungsvorrichtung 10 kann als jegliche Art von Leitung zum Führen der Elektrolytflüssigkeit ausgebildet sein. Vorzugsweise kann die Verbindungsvorrichtung 10 als Schlauch ausgebildet sein, wobei der Schlauch besonders vorzugsweise aus Gummi, Kunststoff, Elastomer, synthetischen Rohstoffen ausgebildet sein kann. Ferner kann die Verbindungsvorrichtung auch als Schlauch, welcher aus einem nachwachsenden Rohstoff, wie beispielsweise Kautschuk, sein kann. Vorzugsweise kann die Verbindungsvorrichtung 10 mittels Tüllen oder Schlauchtüllen mit den Zellstacks verbunden sein.

Die negativen Halbzellen 41 sind mit dem negativen Zufluss 911 und dem negativen Abfluss 912 verbunden, wobei die Elektrolytflüssigkeit 101 über den negativen Zufluss 911 in die negativen Halbzellen 41 gelangen kann und über den negativen Abfluss 912 aus den negativen Halbzellen 41 herausfließen kann. Die positiven Halbzellen 42 sind mit dem positiven Zufluss 921 und dem positiven Abfluss 922 verbunden, wobei die Elektrolytflüssigkeit 101 über den positiven Zufluss 921 in die positiven Halbzellen 42 gelangen kann und über den positiven Abfluss 922 aus den positiven Halbzellen 42 herausfließen kann.

Durch den Reinigungsvorgang kann sich der zu reinigende Elektrolyt erwärmen. Diese Erwärmung des Elektrolyten ist nicht erwünscht, wobei während des Reinigungsvorgangs eine Temperatur der Elektrolytflüssigkeit 40°C nicht überschreiten sollte. Daher kann im ersten Tank 91' und/oder im zweiten Tank 92' ein Wärmetauscher 93 zur Abführung von thermischer Energie vorgesehen sein, wie im Ausführungsbeispiel nach Fig. 3a gezeigt. Damit wird bei einer angenommenen Basisbetriebstemperatur von 30°C die angestrebte Maximaltemperatur von 40°C nicht erreicht.

Auch kann es durch die von Verunreinigungen 11 hervorgerufene Wasserstoffbildung in der Elektrolytflüssigkeit 101, d.h. in der negativen Halbzelle 41, dazu kommen, dass in der positiven Halbzelle 42 mehr Vanadium mit der Oxidationszahl +4 entsteht, als die Elektrolytflüssigkeit 101 vor dem Einpumpen in die negative Halbzelle 41 ursprünglich hatte. Damit würde sich also ein Ungleichgewicht im Ladezustand der Elektrolytflüssigkeit 101 ergeben und sich die Oxidationszahl der Elektrolytflüssigkeit 101 von anfänglichen +3,50 in Richtung +4 verschieben, wobei das Ausmaß dieses Effekts von der Dauer der Anwendung des Reinigungsverfahrens und die anfängliche Konzentration der Verunreinigungen 11 in der Elektrolytflüssigkeit 101 abhängt. Die Wasserstoffproduktion ist in erster Linie davon abhängig, wie lange die mit den Verunreinigungen 11 beschichtete negative Elektrode 412 in Kontakt mit der Elektrolytflüssigkeit 101 steht. Daher ist prinzipiell eine noch schnellere Reduktion der Verunreinigungen 11 wünschenswert.

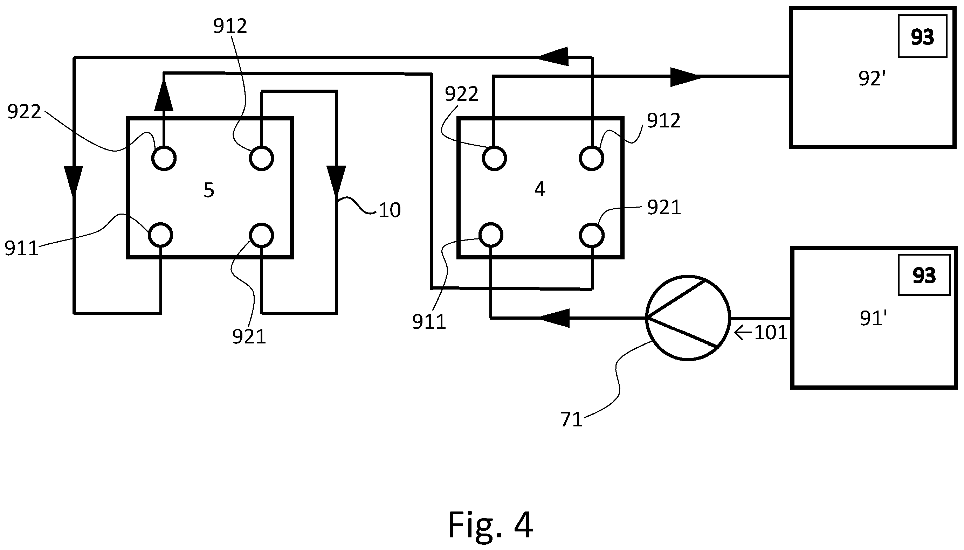

In Fig. 4 ist eine zweite bevorzugte Ausführungsform des erfindungsgemäßen Reinigungsverfahrens dargestellt.

Es wird die Elektrolytflüssigkeit 101 von einem ersten Tank 91' über den negativen Zufluss 911 des ersten Zellstacks 4 durch die negativen Halbzellen 41 des ersten Zellstacks 4 der Reinigungs-Redox-Durchflussbatterie 1' gepumpt. Weiter wird die Elektrolytflüssigkeit 101 von den negativen Halbzellen 41 des ersten Zellstacks 4 über den negativen Abfluss 912 des ersten Zellstacks 4 und über den negativen Zufluss 911 des zweiten Zellstacks 5 durch die negativen Halbzellen 41 des zweiten Zellstacks 5 der Reinigungs-Redox-Durchflussbatterie 1' gepumpt. Weiter wird die Elektrolytflüssigkeit 101 von den negativen Halbzellen 41 des zweiten Zellstacks 5 über den negativen Abfluss 912 des zweiten Zellstacks 5 über eine Verbindungsvorrichtung 10, ohne Durchlaufen eines zweiten Tanks 92', und über den positiven Zufluss 921 des zweiten Zellstacks 5 durch die positiven Halbzellen 42 des zweiten Zellstacks 5 der Reinigungs-Redox-Durchflussbatterie 1' gepumpt. Weiter wird die Elektrolytflüssigkeit 101 von den positiven Halbzellen 42 des zweiten Zellstacks 5 über den positiven Abfluss 922 des zweiten Zellstacks 5 und über den positiven Zufluss 921 des ersten Zellstacks 4 durch die positiven Halbzellen 42 des ersten Zellstacks 4 der Reinigungs-Redox-Durchflussbatterie 1' gepumpt. Weiter wird die Elektrolytflüssigkeit 101 von den positiven Halbzellen 42 des ersten Zellstacks 4 über den positiven Abfluss 922 des ersten Zellstacks 4 in einen zweiten Tank 92' gepumpt.

Auch gemäß der in Fig. 4a und 4b dargestellten bevorzugten Ausführungsform kann im ersten Tank 91' und/oder im zweiten Tank 92' ein Wärmetauscher 93 zur Abführung von thermischer Energie vorgesehen sein, um bei einer angenommenen Basisbetriebstemperatur von 30°C die angestrebte Maximaltemperatur von 40°C nicht zu erreichen.

Zudem können während oder nach dem Reinigungsverfahren die negativen Elektroden 410 der negativen Halbzellen 41 der Reinigungs-Redox-Durchflussbatterie 1' einer Reinigung unterzogen werden, um die auf die negativen Elektroden 410 abgeschiedenen Verunreinigungen 11 zu entfernen.

## Patentansprüche

1. Reinigungsverfahren zum Verringern von Verunreinigungen (11) einer Vanadium-Elektrolytflüssigkeit (101) geeignet für eine Redox-Durchflussbatterie, wobei die Vanadium-Elektrolytflüssigkeit (101) aus einer Mischung von negativer und positiver Vanadium-Elektrolytflüssigkeit der Redox-Durchflussbatterie, vorzugsweise im Verhältnis 50:50, besteht und die Vanadium-Elektrolytflüssigkeit (101) von einem ersten Tank (91') durch negative Halbzellen (41) eines Zellstacks (4) oder mehrerer Zellstacks (4) einer Reinigungs-Redox-Durchflussbatterie (1') umgewälzt wird, wodurch die Vanadium-Elektrolytflüssigkeit (101) die negativen Halbzellen (41) durchläuft, wobei eine Spannung an den Zellstack (4) oder mehrere Zellstacks (4) der Reinigungs-Redox-Durchflussbatterie (1') angelegt wird und die Vanadium-Elektrolytflüssigkeit (101) in den negativen Halbzellen (41) dabei elektrochemisch reduziert wird, wobei zumindest ein Teil der Verunreinigungen (11) der Vanadium-Elektrolytflüssigkeit (101) dabei auf negative Elektroden (410) der negativen Halbzellen (41) abgeschieden wird, **dadurch gekennzeichnet, dass** die Vanadium-Elektrolytflüssigkeit (101) nach dem Durchlaufen der negativen Halbzellen (41) des einen Zellstacks (4) oder der mehreren Zellstacks über eine Verbindungsvorrichtung (10), welche die negativen Halbzellen (41) und die positiven Halbzellen (42) eines Zellstacks miteinander verbindet, ohne Durchlaufen eines zweiten Tanks positive Halbzellen (42) des einen Zellstacks oder der mehreren Zellstacks der Reinigungs-Redox-Durchflussbatterie (1) durchläuft, **und dass** die Vanadium-Elektrolytflüssigkeit (101) nach dem Durchlaufen der positiven Halbzellen (42) des Zellstacks (4) einem zweiten Tank (92') zugeführt und im zweiten Tank (92') gespeichert wird.

2. Reinigungsverfahren nach Anspruch 1, **dadurch gekennzeichnet, dass** die negativen Halbzellen (41) mit einem negativen Zufluss (911) und einem negativen Abfluss (912) verbunden sind, wobei die Vanadium-Elektrolytflüssigkeit (101) über den negativen Zufluss (911) in die negativen Halbzellen (41) hineingeführt wird und über den negativen Abfluss (912) aus den negativen Halbzellen (41) herausgeführt wird und die positiven Halbzellen (42) mit einem positiven Zufluss (921) und einem positiven Abfluss (922) verbunden sind, wobei die Vanadium-Elektrolytflüssigkeit (101) über den positiven Zufluss (921) in die positiven Halbzellen (42) hineingeführt wird und über den positiven Abfluss (922) aus den positiven Halbzellen (42) herausgeführt wird, wobei die Verbindungsvorrichtung (10) den negativen Abfluss (912) und den positiven Zufluss (921) miteinander verbindet.

3. Reinigungsverfahren zum Verringern von Verunreinigungen (11) einer Vanadium-Elektrolytflüssigkeit (101) geeignet für eine Redox-Durchflussbatterie, wobei die Vanadium-Elektrolytflüssigkeit (101) aus einer Mischung von negativer und positiver Vanadium-Elektrolytflüssigkeit der Redox-Durchflussbatterie, vorzugsweise im Verhältnis 50:50, besteht und die Vanadium-Elektrolytflüssigkeit (101) von einem ersten Tank (91') durch negative Halbzellen (41) eines ersten Zellstacks (4) einer Reinigungs-Redox-Durchflussbatterie (1') umgewälzt wird, wodurch die Vanadium-Elektrolytflüssigkeit (101) die negativen Halbzellen (41) des ersten Zellstacks (4) durchläuft, wobei die negativen Halbzellen (41) des ersten Zellstacks (4) mit negativen Halbzellen (41) eines zweiten Zellstacks (5) verbunden sind, wodurch die Vanadium-Elektrolytflüssigkeit (101) die negativen Halbzellen (41) des zweiten Zellstacks (5) durchläuft, wobei eine Spannung an den ersten Zellstack (4) und den zweiten Zellstack (5) der Reinigungs-Redox-Durchflussbatterie (1') angelegt wird und die Vanadium-Elektrolytflüssigkeit (101) in den negativen Halbzellen (41) des ersten Zellstacks (4) und des zweiten Zellstacks (5) dabei elektrochemisch reduziert wird, und dass zumindest ein Teil der Verunreinigungen (11) der Vanadium-Elektrolytflüssigkeit (101) dabei auf negative Elektroden (410) der negativen Halbzellen (41) des ersten Zellstacks (4) und des zweiten Zellstacks (5) abgeschieden wird, wobei die Vanadium-Elektrolytflüssigkeit (101) nach dem Durchlaufen der negativen Halbzellen (41) des ersten Zellstacks (4) und des zweiten Zellstacks (5) über eine Verbindungsvorrichtung (10), welche die negativen Halbzellen (41) des zweiten Zellstacks (5) und die positiven Halbzellen (41) des zweiten Zellstacks (5) miteinander verbindet, ohne Durchlaufen eines zweiten Tanks die positiven Halbzellen (42) des zweiten Zellstacks (5) der Reinigungs-Redox-Durchflussbatterie (1) durchläuft.

4. Reinigungsverfahren nach Anspruch 3, **dadurch gekennzeichnet, dass** die positiven Halbzellen (41) des zweiten Zellstacks (5) mit positiven Halbzellen (41) des ersten Zellstacks (4) verbunden sind, wodurch die Vanadium-Elektrolytflüssigkeit (101) die positiven Halbzellen (41) des ersten Zellstacks (4) durchläuft.

5. Reinigungsverfahren nach Anspruch 3 und 4, **dadurch gekennzeichnet, dass** die Vanadium-Elektrolytflüssigkeit (101) nach dem Durchlaufen der positiven Halbzellen (42) des ersten Zellstacks (4) einem zweiten Tank zugeführt wird.

6. Reinigungsverfahren nach einem der Ansprüche 1 bis 5, **dadurch gekennzeichnet, dass** die Verbindungsvorrichtung (10) vorzugsweise als ein oder mehrere Schläuche ausgebildet ist.

7. Reinigungsverfahren nach einem der Ansprüche 1 bis 6, **dadurch gekennzeichnet, dass** die Verbindungsvorrichtung (10) eine Länge von 100 Metern nicht überschreitet, besonders vorzugsweise die Verbindungsvorrichtung (10) eine Länge von 10 Metern nicht überschreitet, ganz besonders vorzugsweise die Verbindungsvorrichtung (10) eine Länge von 1 Meter nicht überschreitet und in der am meisten bevorzugten Ausführungsform die Verbindungsvorrichtung (10) eine Länge von 10 cm nicht überschreitet.

8. Reinigungsverfahren nach jeweils Anspruch 1 bis 7, **dadurch gekennzeichnet, dass** die Vanadium-Elektrolytflüssigkeit (101) nach Abschluss des Reinigungsverfahrens oxidiert wird.

9. Reinigungsverfahren nach einem der Ansprüche 1 bis 8, **dadurch gekennzeichnet, dass** während oder nach dem Reinigungsverfahren die negativen Elektroden (410) der negativen Halbzellen (41) einer Reinigung unterzogen werden, um die auf die negativen Elektroden (410) abgeschiedenen Verunreinigungen (11) zu entfernen.

10. Reinigungsverfahren nach einem der Ansprüche 1 bis 9, **dadurch gekennzeichnet, dass** das Reinigungsverfahren durchgeführt wird, bis die Vanadium-Elektrolytflüssigkeit (101) weniger als 0.5 Massen-ppm Cu als Verunreinigung aufweist.

11. Reinigungsverfahren nach einem der Ansprüche 1 bis 10, **dadurch gekennzeichnet, dass** das Reinigungsverfahren durchgeführt wird, bis die Vanadium-Elektrolytflüssigkeit (101) unter 1 Massen-ppm As, Pb, Sb als Verunreinigung aufweist.

12. Reinigungsverfahren nach einem der Ansprüche 1 bis 11, **dadurch gekennzeichnet, dass** das Reinigungsverfahren durchgeführt wird, bis die Vanadium-Elektrolytflüssigkeit (101) jeweils unter 0,1 Massen-ppm der folgenden Elemente aufweist: Rh, Ru, Au, Ag und anderer Elemente der Pt-Gruppe.

13. Reinigungsverfahren nach einem der Ansprüche 1 bis 12, **dadurch gekennzeichnet, dass** die elektrochemische Reduzierung der Elektrolytflüssigkeit (101) in den negativen Halbzellen (41) durch zweiwertiges Vanadium V" gebildet wird.

## Claims

1. A purifying method for reducing contaminants (11) in a vanadium electrolyte liquid (101) suitable for a redox flow battery, the vanadium electrolyte liquid (101) consisting of a mixture of negative and positive vanadium electrolyte liquid of the redox flow battery, preferably in a ratio of 50:50, and the vanadium electrolyte liquid (101) being circulated from a first tank (91') through negative half-cells (41) of one or more cell stacks (4) of a purifying redox flow battery (1'), by which the vanadium electrolyte liquid (101) passes through the negative half-cells (41), wherein a voltage is applied to the one or more cell stacks (4) of the purifying redox flow battery (1') and the vanadium electrolyte liquid (101) in the negative half-cells (41) is electrochemically reduced in the process, wherein at least some of the contaminants (11) in the vanadium electrolyte liquid (101) are deposited on negative electrodes (410) of the negative half-cells (41),
**characterized in that** the vanadium electrolyte liquid (101), after passing through the negative half-cells (41) of the one or more cell stacks (4), passes through positive half-cells (42) of the one or more cell stacks of the purifying redox flow battery (1), without passing through a second tank, via a connecting device (10) that connects the negative half-cells (41) and the positive half-cells (42) of a cell stack, **and in that** the vanadium electrolyte liquid (101) is fed to a second tank after passing through positive half-cells (42) of the one or more cell stacks (4) and is stored in the second tank.

2. The purifying method according to claim 1, **characterized in that** the negative half-cells (41) are connected to a negative inflow (911) and a negative outflow (912), wherein the vanadium electrolyte liquid (101) is fed into the negative half-cells (41) via the negative inflow (911) and is guided out of the negative half-cells (41) via the negative outflow (912), and the positive half-cells (42) are connected to a positive inflow (921) and a positive outflow (922), wherein the electrolyte liquid (101) is fed into the positive half-cells (42) via the positive inflow (921) and is guided out of the positive half-cells (42) via the positive outflow (922), wherein the connecting device (10) connects the negative outflow (912) and the positive inflow (921) to one another.

3. A purifying method for reducing contaminants (11) in a vanadium electrolyte liquid (101) suitable for a redox flow battery, the vanadium electrolyte liquid (101) consisting of a mixture of negative and positive vanadium electrolyte liquid of the redox flow battery, preferably in a ratio of 50:50, and the vanadium electrolyte liquid (101) being circulated from a first tank (91') through negative half-cells (41) of a first cell stack (4) of a purifying redox flow battery (1'), whereby the vanadium electrolyte liquid (101) passes through the negative half-cells (41) of the first cell stack (4), wherein the negative half-cells (41) of the first cell stack (4) are connected to negative half-cells (41) of a second cell stack (5), by which the vanadium electrolyte liquid (101) passes through the negative half-cells (41) of the second cell stack (5), wherein a voltage is applied to the first cell stack (4) and the second cell stack (5) of the purifying redox flow battery (1') and the vanadium electrolyte liquid (101) in the negative half-cells (41) of the first cell stack (4) and of the second cell stack (5) is electrochemically reduced in the process, and in that at least some of the contaminants (11) in the vanadium electrolyte liquid (101) are deposited on negative electrodes (410) of the negative half-cells (41) of the first cell stack (4) and of the second cell stack (5), wherein the vanadium electrolyte liquid (101), after passing through the negative half-cells (41) of the first cell stack (4) and of the second cell stack (5), passes through the positive half-cells (42) of the second cell stack (5) of the purifying redox flow battery (1) via a connecting device (10) which connects the negative half-cells (41) of the second cell stack (5) and the positive half-cells (41) of the second cell stack (5) to one another without passing through a second tank.

4. The purifying method according to claim 3, **characterized in that** the positive half-cells (41) of the second cell stack (5) are connected to positive half-cells (41) of the first cell stack, whereby the vanadium electrolyte liquid (101) passes through the positive half-cells (41) of the first cell stack (4).

5. The purifying method according to claims 3 and 4, **characterized in that** the vanadium electrolyte liquid (101) is fed to a second tank after passing through the positive half-cells (42) of the first cell stack (4).

6. The purifying method according to any of claims 1 to 5, **characterized in that** the connecting device (10) is preferably designed as one or more hoses.

7. The purifying method according to any of claims 1 to 6, **characterized in that** the connecting device (10) does not exceed a length of 100 meters, particularly preferably the connecting device (10) does not exceed a length of 10 meters, most preferably the connecting device (10) does not exceed a length of 1 meter and in the most preferred embodiment the connecting device (10) does not exceed a length of 10 cm.

8. The purifying method according to claims 1 to 7 in each case, **characterized in that** the vanadium electrolyte liquid (101) is oxidized after completion of the purification process.

9. The purifying method according to any of claims 1 to 8, **characterized in that** during or after the purification process, the negative electrodes (410) of the negative half-cells (41) are subjected to a cleansing in order to remove the contaminants (11) deposited on the negative electrodes (410).

10. The purifying method according to any of claims 1 to 9, **characterized in that** the purifying method is carried out until the vanadium electrolyte liquid (101) has less than 0.5 mass ppm Cu as contaminant.

11. The purifying method according to any of claims 1 to 10, **characterized in that** the purifying method is carried out until the vanadium electrolyte liquid (101) has less than 1 mass ppm As, Pb, Sb as contaminants.

12. The purifying method according to any of claims 1 to 11, **characterized in that** the purifying method is carried out until the vanadium electrolyte liquid (101) has less than 0.1 mass ppm of each of the following elements: Rh, Ru, Au, Ag and other elements of the Pt group.

13. The purifying method according to any of claims 1 to 12, **characterized in that** the electrochemical reduction of the electrolyte liquid (101) in the negative half-cells (41) is formed by divalent vanadium V".

## Revendications

1. Procédé de nettoyage permettant de réduire les impuretés (11) d'un liquide électrolytique à base de vanadium (101) approprié pour une batterie à flux redox, dans lequel le liquide électrolytique à base de vanadium (101) est constitué d'un mélange de liquide électrolytique à base de vanadium négatif et positif de la batterie à flux redox, de préférence dans un rapport 50:50, et le liquide électrolytique à base de vanadium (101) est mis en circulation à partir d'un premier réservoir (91') à travers des demi-cellules (41) négatives d'un empilement de cellules (4) ou de plusieurs empilements de cellules (4) d'une batterie à flux redox de nettoyage (1'), moyennant quoi le liquide électrolytique à base de vanadium (101) traverse les demi-cellules (41) négatives, dans lequel une tension est appliquée à l'empilement de cellules (4) ou aux plusieurs empilements de cellules (4) de la batterie à flux redox de nettoyage (1') et le liquide électrolytique à base de vanadium (101) dans les demi-cellules (41) négatives est ainsi réduit par voie électrochimique, dans lequel au moins une partie des impuretés (11) du liquide électrolytique à base de vanadium (101) est ainsi déposée sur des électrodes négatives (410) des demi-cellules (41) négatives,
**caractérisé en ce que** le liquide électrolytique à base de vanadium (101), après avoir traversé les demi-cellules (41) négatives d'un empilement de cellules (4) ou des plusieurs empilements de cellules, par l'intermédiaire d'un dispositif de liaison (10), qui relie entre elles les demi-cellules (41) négatives et les demi-cellules positives (42) d'un empilement de cellules, traverse, sans traverser un second réservoir, des demi-cellules positives (42) de l'empilement de cellules ou des plusieurs empilements de cellules de la batterie à flux redox de nettoyage (1), **et en ce que** le liquide électrolytique à base de vanadium (101) est amené à un second réservoir (92') après avoir traversé les demi-cellules positives (42) de l'empilement de cellules (4) et est stocké dans le second réservoir (92').

2. Procédé de nettoyage selon la revendication 1, **caractérisé en ce que** les demi-cellules (41) négatives sont reliées à une entrée négative (911) et à une sortie négative (912), dans lequel le liquide électrolytique à base de vanadium (101) est introduit dans les demi-cellules (41) négatives par l'intermédiaire de l'entrée négative (911) et est évacué des demi-cellules (41) négatives par l'intermédiaire de la sortie négative (912), et les demi-cellules positives (42) sont reliées à une entrée positive (921) et à une sortie positive (922), dans lequel le liquide d'électrolyte à base de vanadium (101) est introduit dans les demi-cellules positives (42) par l'intermédiaire de l'entrée positive (921) et est évacué des demi-cellules positives (42) par l'intermédiaire de la sortie positive (922), dans lequel le dispositif de liaison (10) relie la sortie négative (912) et l'entrée positive (921).

3. Procédé de nettoyage permettant de réduire les impuretés (11) d'un liquide électrolytique à base de vanadium (101) approprié pour une batterie à flux redox, dans lequel le liquide électrolytique à base de vanadium (101) est constitué d'un mélange de liquide électrolytique à base de vanadium négatif et positif de la batterie à flux redox, de préférence dans un rapport 50:50, et le liquide électrolytique à base de vanadium (101) est mis en circulation à partir d'un premier réservoir (91') à travers des demi-cellules (41) négatives d'une premier empilement de cellules (4) d'une batterie à flux redox de nettoyage (1'), moyennant quoi le liquide électrolytique à base de vanadium (101) traverse les demi-cellules (41) négatives du premier empilement de cellules (4), dans lequel les demi-cellules (41) négatives du premier empilement de cellules (4) sont reliées à des demi-cellules (41) négatives d'un second empilement de cellules (5), moyennant quoi le liquide électrolytique à base de vanadium (101) traverse les demi-cellules (41) négatives du second empilement de cellules (5), dans lequel une tension est appliquée au premier empilement de cellules (4) et au second empilement de cellules (5) de la batterie à flux redox de nettoyage (1') et le liquide électrolytique à base de vanadium (101) dans les demi-cellules (41) négatives du premier empilement de cellules (4) et du second empilement de cellules (5) est ainsi réduit par voie électrochimique, **et en ce qu'**au moins une partie des impuretés (11) du liquide électrolytique à base de vanadium (101) est déposée sur des électrodes négatives (410) des demi-cellules (41) négatives du premier empilement de cellules (4) et du second empilement de cellules (5), dans lequel le liquide électrolytique à base de vanadium (101), après avoir traversé les demi-cellules (41) négatives du premier empilement de cellules (4) et du second empilement de cellules (5), par l'intermédiaire d'un dispositif de liaison (10), qui relie entre elles les demi-cellules (41) négatives du second empilement de cellules (5) et les demi-cellules (41) positives du second empilement de cellules (5), traverse, sans traverser un second réservoir, les demi-cellules positives (42) du second empilement de cellules (5) de la batterie à flux redox de nettoyage (1).

4. Procédé de nettoyage selon la revendication 3, **caractérisé en ce que** les demi-cellules (41) positives du second empilement de cellules (5) sont reliées à des demi-cellules (41) positives du premier empilement de cellules (4), moyennant quoi le liquide électrolytique à base de vanadium (101) traverse ainsi les demi-cellules (41) positives du premier empilement de cellules (4).

5. Procédé de nettoyage selon les revendications 3 et 4,
**caractérisé en ce que** le liquide électrolytique à base de vanadium (101) est amené à un second réservoir après avoir traversé les demi-cellules positives (42) du premier empilement de cellules (4).

6. Procédé de nettoyage selon l'une des revendications 1 à 5,
**caractérisé en ce que** le dispositif de liaison (10) est de préférence réalisé sous la forme d'un ou plusieurs tuyaux.

7. Procédé de nettoyage selon l'une des revendications 1 à 6,
**caractérisé en ce que** le dispositif de liaison (10) n'excède pas une longueur de 100 mètres, de préférence en particulier le dispositif de liaison (10) n'excède pas une longueur de 10 mètres, de manière particulièrement préférée le dispositif de liaison (10) n'excède pas une longueur de 1 mètre et dans le mode de réalisation le plus préféré le dispositif de liaison (10) n'excède pas une longueur de 10 cm.

8. Procédé de nettoyage selon respectivement les revendications 1 à 7, **caractérisé en ce que** le liquide électrolytique à base de vanadium (101) est oxydé après la fin du procédé de nettoyage.

9. Procédé de nettoyage selon l'une des revendications 1 à 8,
**caractérisé en ce que,** pendant ou après le procédé de nettoyage, les électrodes négatives (410) des demi-cellules (41) négatives sont soumises à un nettoyage afin d'éliminer les impuretés (11) déposées sur les électrodes négatives (410).

10. Procédé de nettoyage selon l'une des revendications 1 à 9,
**caractérisé en ce que** le procédé de nettoyage est mis en œuvre jusqu'à ce que le liquide électrolytique à base de vanadium (101) présente moins de 0,5 ppm en masse de Cu comme impureté.

11. Procédé de nettoyage selon l'une des revendications 1 à 10,
**caractérisé en ce que** le procédé de nettoyage est mis en œuvre jusqu'à ce que le liquide électrolytique à base de vanadium (101) présente moins de 1 ppm en masse d'As, Pb, Sb comme impuretés.

12. Procédé de nettoyage selon l'une des revendications 1 à 11,
**caractérisé en ce que** le procédé de nettoyage est mis en œuvre jusqu'à ce que le liquide électrolytique à base de vanadium (101) présente respectivement moins de 0,1 ppm en masse des éléments suivants : Rh, Ru, Au, Ag et d'autres éléments du groupe Pt.

13. Procédé de nettoyage selon l'une des revendications 1 à 12,
**caractérisé en ce que** la réduction électrochimique du liquide électrolytique (101) dans les demi-cellules négatives (41) est formée par du vanadium divalent V".
